# EUROPÄISCHE PATENTSCHRIFT

(11) **EP 2 706 037 B1**
(45) Veröffentlichungstag und Bekanntmachung des Hinweises auf die Patenterteilung: **25.05.2016**
(21) Anmeldenummer: 13181751.2
(22) Anmeldetag: 27.08.2013
(51) Int. Cl.: B66F 9/24, B66F 9/075

(54) **Flurförderzeug mit geschaltetem Reluktanzmotor**
Industrial truck with switched reluctance motor
Chariot de manutention avec moteur à reluctance commuté

(30) Priorität: 10.09.2012 DE 102012108409
(43) Veröffentlichungstag der Anmeldung: 12.03.2014
(73) Patentinhaber: Linde Material Handling GmbH, 63743 Aschaffenburg (DE)
(72) Erfinder: Weiner, Christian, 63785 Obernburg (DE); Sippel, Heiko, 63741 Aschaffenburg (DE); Herrmann, Udo, 63867 Johannesberg (DE)
(74) Vertreter: Geirhos, Johann

(56) Entgegenhaltungen:
- EP-A2- 0 881 743
- WO-A1-98/22960
- CN-U- 201 975 970
- DE-A1- 10 215 128
- JP-A- 2012 090 447
- US-A1- 2009 236 930

## Beschreibung

Die Erfindung betrifft ein Flurförderzeug mit zumindest einem Elektromotor. Insbesondere betrifft die Erfindung ein Flurförderzeug mit zumindest einem Elektromotor für den Fahrantrieb und/oder für den Antrieb einer Arbeitshydraulik, die durch eine Hydraulikpumpe mit Druckmittel versorgt wird, wobei die Hydraulikpumpe von dem Elektromotor angetrieben wird und der Elektromotor eine geschaltete Reluktanzmaschine ist.

Es ist möglich, eine Reluktanzmaschine als geschaltete Reluktanzmaschine mit sogenannter Flussumschaltung (flux switching) auszuführen, die zweiphasig geschaltete Reluktanzmaschinen sind und einen Zweiquadrantenbetrieb als Motor oder Generator in einer Drehrichtung ermöglichen.

Die Statorwicklungen einer solchen Flussumschaltung-Reluktanzmaschine weisen eine Teilung (Pitch) auf, die in ihrem Winkel doppelt so groß wie die Teilung von zugehörigen Statorpolen ist. Die zwei Statorwicklungen der zweiphasigen Flussumschaltung-Reluktanzmaschinen sind dabei zueinander um einen symmetrischen Winkel gleichmäßig versetzt, d.h. bei einer geschalteten Reluktanzmaschine mit vier Statorpolen um 90° und bei einer mit acht Statorpolen um 45°.

Dabei ist eine der beiden Statorwicklungen als Feldwicklung ausgebildet, die sich dadurch auszeichnet, dass ein konstanter Strom durch diese fließt und sie ein permanentes magnetisches Feld erzeugt. Die zweite Statorwicklung ist als Ankerwicklung ausgebildet, die gegenüber der Feldwicklung um einen Statorpol versetzt ist. Die Ankerwicklung wird so mit Strom geschaltet, dass diese ein wechselndes magnetisches Feld erzeugt. Im Falle einer Teilung mit vier Statorpolen ist das magnetische Feld der Ankerwicklung somit quer zu dem magnetischen Feld der Feldwicklung angeordnet. Allgemein ist das in Richtung auf den Rotor erzeugte magnetische Feld der Ankerwicklung gegenüber dem entsprechenden magnetischen Feld der Feldwicklung unter einem Winkel angeordnet, der demjenigen zwischen zwei Polen des Stators entspricht, somit im Falle von acht Statorpolen einem Winkel von 45°. Die Ankerwicklung kann mit alternierender Polung mit Strom beschaltet werden und es bildet sich ein magnetisches Drehfeld.

Die Drehmomenterzeugung erfolgt in einer Reluktanzmaschine aufgrund der auf einen weichmagnetischen Stoff eines Rotors in einem Magnetfeld wirkenden Maxwellschen Kraft, durch die das magnetische System den Zustand des geringsten magnetischen Widerstands oder Reluktanz anstrebt. Durch eine spezielle Formgebung des Läufers oder Rotors mit ausgeprägten Rotorpolen wird diesem eine starke bevorzugte Ausrichtung zum magnetischen Feld eingeprägt und der Rotor sucht dem magnetischen Drehfeld zu folgen. Dabei weist der Rotor bei einer geschalteten Reluktanzmaschine üblicherweise die halbe Anzahl von Rotorpolen gegenüber der Anzahl Statorpole auf und wird mit jedem Schaltvorgang der Ankerwicklung auf die um den Winkel der Teilung der Statorpole versetzte Gruppe der Statorpole ausgerichtet. Durch eine spezielle Formgebung der ausgeprägten Rotorpole des Rotors wird das Anlaufen aus dem Stillstand erreicht und die Drehrichtung eingeprägt. Dabei weisen im Regelfall die Rotorpole eine Asymmetrie auf, indem der Rotorpol im Querschnitt betrachtet nicht achsensymmetrisch aufgebaut ist.

Insbesondere bei batterie-elektrisch betriebenen Flurförderzeugen werden als elektrische Antriebsmotoren für den Fahrantrieb, aber auch zum Antrieb von Arbeitsvorrichtungen, wie auch für den Antrieb einer Pumpe einer Arbeitshydraulik Elektromotoren eingesetzt. Hierfür können die beschriebenen, geschalteten Reluktanzmaschinen eingesetzt werden.

Aufgrund der guten elektrischen Leitfähigkeit sind die Wicklungen der Ankerwicklung und/oder der Feldwicklung der Reluktanzmaschinen üblicherweise in Kupferdraht ausgeführt. Nachteilig an diesem Stand der Technik ist, dass durch das Material Kupfer hohe Kosten entstehen.

Die D1, die DE 102 15 128 A1, offenbart ein Hydraulikaggregat dessen Elektromotor eine geschaltete Reluktanzmaschine ist.

Der vorliegenden Erfindung liegt die Aufgabe zugrunde, ein Flurförderzeug mit Elektromotor als geschalteter Reluktanzmaschine zur Verfügung zu stellen, das kostengünstig herzustellen ist.

Diese Aufgabe wird durch ein Flurförderzeug mit den Merkmalen des Patentanspruchs 1 gelöst. Vorteilhafte Weiterbildungen der Erfindung werden in den Unteransprüchen angegeben.

Vorteilhaft lassen sich dadurch erhebliche Kosten einsparen. Aufgrund der Abhängigkeit der elektrischen Leitfähigkeit von dem Leitungsdurchmesser und damit vom Volumen ergibt sich noch ein erheblich größerer Vorteil für Aluminium gegenüber Kupfer als nur bei Betrachtung eines geringeren Materialpreises. Aluminium hat eine erheblich geringere Dichte von weniger als einem Drittel der Dichte von Kupfer. Gleichzeitig ist zurzeit der Materialpreis von Aluminium pro Gewicht gegenüber Kupfer um den Faktor zwei bis drei geringer. Diese beiden Effekte kombinieren sich und führen zu einem um einen Faktor sieben bis zehn geringeren Materialpreis.

In einer Weiterbildung dient die Reluktanzmaschine zum Antrieb der Arbeitshydraulik. Die Arbeitshydraulik kann eine Hubvorrichtung für Lasten, insbesondere ein Hubgerüst mit höhenbeweglich geführtem Lastaufnahmemittel, und/oder eine hydraulische Lenkung umfassen. Weiterhin kann die Arbeitshydraulik einen gegebenenfalls vorhandenen Neigeantrieb für das Hubgerüst und einen gegebenenfalls vorhandenen Zusatzantrieb, beispielsweise einer Seitenschiebereinrichtung für ein Lastaufnahmemittel umfassen.

Die Wicklungen sind als Stäbe oder Schienen ausgeführt.

Es kann eine Feldwicklung aus Aluminium bestehen.

Insbesondere bei einer Reluktanzmaschine wird die Feldwicklung stets gleich bestromt. Da hier kein Wechselfeld erzeugt wird, wirken sich eventuelle Nachteile von Aluminium, wie größeres Bauvolumen insgesamt und damit weniger kompaktes Feld, geringer aus. Durch eine Kombination, bei der insbesondere nur die Feldwicklung aus Aluminium gebildet ist und eventuell die Ankerwicklung aus einem anderen Material oder wie herkömmliche aus Kupfer besteht, kann dadurch gegebenenfalls eine Optimierung erreicht werden.

Vorteilhaft besteht eine Ankerwicklung aus Aluminium.

Neben der von der Erfindung umfassten Variante, dass sowohl die Feldwicklung wie auch die Ankerwicklung aus Aluminium bestehen, ist es ebenso möglich, auch nur die Ankerwicklung aus Aluminium auszubilden und die Feldwicklung aus einem anderen Material oder wie herkömmlich aus Kupfer herzustellen.

Weitere Vorteile und Einzelheiten der Erfindung werden anhand des in den schematischen Figuren dargestellten Ausführungsbeispiels näher erläutert. Hierbei zeigen
- Fig. 1a: schematisch ein Ausführungsbeispiel eines Elektromotors als geschaltete Reluktanzmaschine im Querschnitt, der bei dem erfindungsgemäßen Flurförderzeug zum Einsatz kommen,
- Fig. 1b: schematisch den Elektromotor der Fig. 1 a in einer zweiten Drehwinkellage,
- Fig. 2: schematisch den Stromverlauf von Ankerwicklung und Feldwicklung der geschalteten Reluktanzmaschine und
- Fig. 3: ein Ausführungsbeispiel eines erfindungsgemäßen Flurförderzeugs.

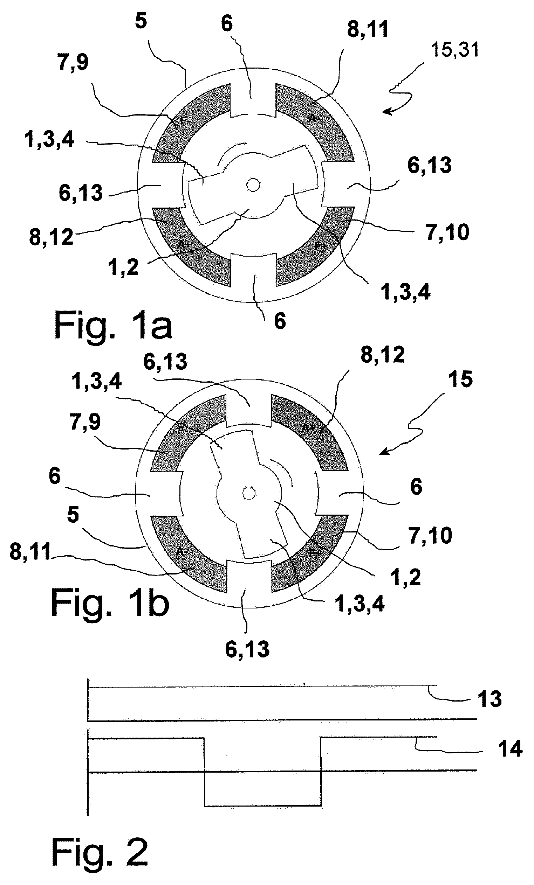

Die Fig. 1a zeigt schematisch ein Ausführungsbeispiel eines Elektromotors 15 als Reluktanzmaschine 31 einer Arbeitshydraulik, der bei einem erfindungsgemäßen

Flurförderzeug zum Einsatz kommt. Der Rotor 1 besteht aus einer Rotorwelle 2 sowie zwei Segmenten 3 aus weichmagnetischem oder einem geeigneten hochpermeablen Material, die in Umfangsrichtung Rotorpole 4 bilden, die beim Anliegen eines äußeren Magnetfelds sich mit dem Magnetfeld auszurichten suchen, da in der Orientierung der Rotorpole 4 die kleinste magnetische Reluktanz vorliegt. Ein Stator 5 weist insgesamt vier gleichmäßig verteilte Statorpole 6 auf, die somit eine Teilung von 90° haben. Eine Feldwicklung 7 umfasst mit einer Teilung von 180° jeweils ein Statorpolpaar 6. Um 90° hierzu versetzt ist eine Ankerwicklung 8 ebenfalls mit einer Teilung von 180° angeordnet, so dass diese ebenfalls jeweils ein Paar von Statorpolen 6 umfasst. In der Darstellung der Fig. 1a ist eine minusseitig geschaltete Seite 9 und eine plusseitig geschaltete Seite 10 der Feldwicklung 7 dargestellt. Ebenso ist eine minusseitig geschaltete Seite 11 und eine plusseitig geschaltete Seite 12 der Ankerwicklung 8 dargestellt. In diesem Schaltzustand bilden die von gegenpolig geschalteten Teilen der Ankerwicklung 8 und Feldwicklung 7 umschlossenen Statorpole 6 magnetische Pole 13, nach denen sich der Rotor 1 ausrichtet.

Die Feldwicklung 7 und die Ankerwicklung 8 bestehen aus Aluminium als Material, beispielsweise aus Aluminiumdraht. Es ist denkbar, beispielsweise allein die Feldwicklung 7 aus Aluminium herzustellen.

Die Fig. 1b zeigt schematisch den Elektromotor 15 der Fig. 1 a in einer zweiten Drehwinkellage. Der Rotor 1 mit Rotorwelle 2 sowie den Segmenten 3 bzw. Rotorpolen 4 ist innerhalb des Stators 5 mit den Statorpolen 6 um 90° verdreht ausgerichtet, da die Ankerwicklung 8 nun umgekehrt bestromt ist. Die minusseitig geschaltete Seite 9 und die plusseitig geschaltete Seite 10 der Feldwicklung 7 sind gegenüber der Fig. 1a gleich, jedoch sind nun die minusseitig geschaltete Seite 11 und die plusseitig geschaltete Seite 12 der Ankerwicklung 8 vertauscht. In diesem Schaltzustand bilden gegenüber der Darstellung der Fig. 1a die anderen beiden Statorpole 6 magnetische Pole 13, nach denen sich der Rotor 1 ausrichtet.

Die Fig. 2 zeigt schematisch über der Rotorposition den Stromverlauf 13 der Feldwicklung 7, der über den Drehwinkel des Rotors 1 konstant ist, und den Stromverlauf 14 der Ankerwicklung 8, der als Rechteck mit alternierender Polung geschaltet ist.

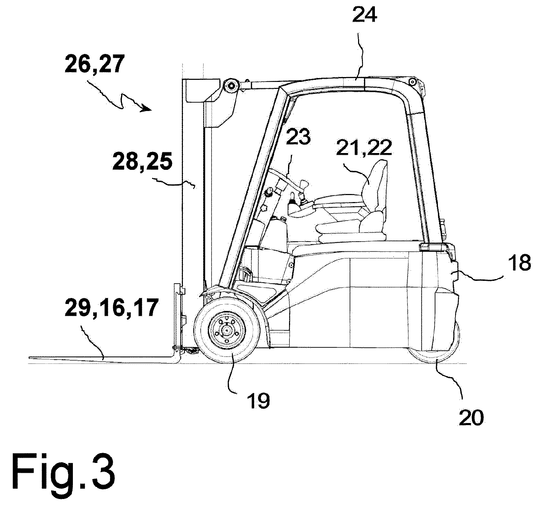

Die Fig. 3 zeigt ein Ausführungsbeispiel eines erfindungsgemäßen Flurförderzeugs 26 in Seitenansicht. Das dargestellte Flurförderzeug 26 ist beispielsweise als elektrisch über eine nicht dargestellte Traktionsbatterie betriebener Gegengewichtsgabelstapler 27 ausgebildet.

Der Gegengewichtsgabelstapler 27 weist frontseitig eine als Hubgerüst 25 ausgebildete vordere Hubvorrichtung 28 mit einem an dieser höhenbeweglich geführten Lastaufnahmemittel 29 auf, beispielsweise einer aus zwei Gabelzinken 16 bestehenden Lastgabel 17. Ein auf dem Lastaufnahmemittel 29 aufliegendes Lastgewicht wird durch ein heckseitiges hinteres Gegengewicht 18 ausgeglichen. Dabei erfolgt eine Hubbewegung des Hubgerüstes 25 durch einen in der Fig. 5 nicht dargestellten Hydraulikzylinder als Hubantrieb, der Teil einer Arbeitshydraulik ist und durch eine Hydraulikpumpe mit Druckmittel versorgt wird, die von einer geschalteten Reluktanzmaschine gemäß den Figuren 1 und 2 angetrieben ist. Alternativ ist es auch möglich, dass die Hubbewegung durch mehrere Hydraulikzylinder oder Teleskopzylinder erfolgt. Weitere Verbraucher der Arbeitshydraulik können von einem einen oder mehrere Neigezylinder umfassenden Neigeantrieb des Hubgerüstes 25 und einem oder mehrerer gegebenenfalls vorhandenen Zusatzantrieben gebildet werden, beispielsweise einer Seitenschiebereinrichtung des Lastaufnahmemittels 29.

Der in dem vorliegenden Beispiel beispielsweise batterie-elektrisch angetriebene Gegengewichtsgabelstapler 27 weist eine Vorderachse mit zwei Vorderrädern 19 auf, die bevorzugt als Antriebsräder ausgebildet sind. Zum Antrieb der beiden Antriebsräder kann ein Einzelradantrieb mit einem elektrischen Antriebsmotor für jedes Antriebsrad oder ein beide Räder über ein Differentialgetriebe antreibender einzelner elektrischer Antriebsmotor vorgesehen werden. Der bzw. die elektrischen Fahrmotoren können ebenfalls als geschalteten Reluktanzmaschine gemäß den Figuren 1 und 2 ausgeführt sein. Das im dargestellten Ausführungsbeispiel als Dreiradstapler ausgebildete Flurförderzeug 26 wird über ein einzelnes gelenktes Rad 20 im Fahrzeugheck gesteuert. Dabei kann der Radeinschlag durch einen in der Fig. 3 nicht dargestellten Hydraulikzylinder bewirkt werden, der als Lenkhydraulik Teil der Arbeitshydraulik ist. In der hier als Beispiel gezeigten Alternative, in der die Vorderrädern 19 als angetriebene Räder ausgebildet sind, ist das gelenkte Rad 20 als nicht angetriebenes Rad ausgeführt. Der Gegengewichtsgabelstapler 27 kann alternativ mit einem verbrennungsmotorischen Antriebssystem versehen sein und/oder als Vierradstapler, bei dem zur Lenkung eine heckseitige Lenkachse mit zwei gelenkten Rädern vorgesehen ist.

Ein Fahrerplatz 21 des Flurförderzeugs 26 ist mit einem Fahrersitz 22 versehen. Der Fahrersitz 22 und weitere Bedienelemente, beispielsweise ein Lenkrad 23, befinden sich unter einem Fahrerschutzdach 24.

Unterhalb des Fahrersitzes 22 befindet sich bei dem batterie-elektrisch angetriebenen Gegengewichtsgabelstapler 27 eine Traktionsbatterie und wäre bei einem verbrennungsmotorisch angetriebenen Gegengewichtsgabelstapler ein Verbrennungsmotor angeordnet.

Die Erfindung ist nicht beschränkt auf Gegengewichtsgabelstapler. Vielmehr kann jegliche Art von Flurförderzeugen mit einem Elektromotoren gemäß der Erfindung ausgestattet werden. Es können etwa auch Lagertechnikgeräte mit elektrischem Antrieb mit einem solchen Elektromotor versehen werden, wie beispielsweise Hubwagen, Kommissionierer, Schlepper, Plattformwagen, Schubstapler, Schubmaststapler und Regalstapler.

## Patentansprüche

1. Flurförderzeug mit zumindest einem Elektromotor (15) für den Fahrantrieb und/oder für den Antrieb einer Arbeitshydraulik, die durch eine Hydraulikpumpe mit Druckmittel versorgt wird, wobei die Hydraulikpumpe von dem Elektromotor (15) angetrieben wird und der Elektromotor (15) eine geschaltete Reluktanzmaschine (31) ist,
**dadurch gekennzeichnet,**
**dass** Wicklungen (7,8) der geschaltete Reluktanzmaschine (31) aus Aluminium bestehen sowie als Stäbe oder Schienen ausgeführt sind.

2. Flurförderzeug nach Anspruch 1,
**dadurch gekennzeichnet,**
**dass** die Reluktanzmaschine (31) zum Antrieb der Arbeitshydraulik dient.

3. Flurförderzeug nach Anspruch 1 oder 2,
**dadurch gekennzeichnet,**
**dass** eine Feldwicklung (7) aus Aluminium besteht.

4. Flurförderzeug nach einem der Ansprüche 1 bis 3,
**dadurch gekennzeichnet,**
**dass** eine Ankervuicklung (8) aus Aluminium besteht.

## Claims

1. Industrial truck having at least one electric motor (15) for the traction drive and/or for the drive of a working hydraulics system which is supplied with a pressure medium by a hydraulic pump, wherein the hydraulic pump is driven by the electric motor (15) and the electric motor (15) is a switched reluctance machine (31), **characterized in that** windings (7, 8) of the switched reluctance machine (31) are composed of aluminium and also are designed in the form of bars or rails.

2. Industrial truck according to Claim 1, **characterized in that** the reluctance machine (31) serves to drive the working hydraulics system.

3. Industrial truck according to Claim 1 or 2, **characterized in that** a field winding (7) is composed of aluminium.

4. Industrial truck according to one of Claims 1 to 3, **characterized in that** an armature winding (8) is composed of aluminium.

## Revendications

1. Chariot de manutention comprenant au moins un moteur électrique (15) pour l'entraînement de conduite et/ou pour l'entraînement d'un système hydraulique de travail qui est alimenté en fluide sous pression par une pompe hydraulique, la pompe hydraulique étant entraînée par le moteur électrique (15) et le moteur électrique (15) étant une machine à reluctance commutée (31), **caractérisé en ce que**
des enroulements (7, 8) de la machine à reluctance commutée (31) se composent d'aluminium et sont réalisés sous forme de barres ou de rails.

2. Chariot de manutention selon la revendication 1, **caractérisé en ce que** la machine à reluctance (31) sert à l'entraînement du système hydraulique de travail.

3. Chariot de manutention selon la revendication 1 ou 2,
**caractérisé en ce**
**qu'**un enroulement de champ (7) se compose d'aluminium.

4. Chariot de manutention selon les revendications 1 à 3,
**caractérisé en ce qu'**un enroulement d'induit (8) se compose d'aluminium.
